# FASCICULE DE BREVET EUROPEEN

(11) **EP 0 903 839 B1**
(45) Date de publication et mention de la délivrance du brevet: **16.11.2005**
(21) Numéro de dépôt: 98410102.2
(22) Date de dépôt: 16.09.1998
(51) Int. Cl.: H02M 3/158, G05F 1/56

(54) **Régulateur de tension**
Spannungsregler
Voltage regulator

(30) Priorité: 18.09.1997 FR 9711837
(43) Date de publication de la demande: 24.03.1999
(73) Titulaire: STMicroelectronics S.A., 92120 Montrouge (FR)
(72) Inventeur: Ferry, Claude, 38120 Le Fontanil (FR); Serra, Carlos, 38420 Le Versoud (FR)
(74) Mandataire: de Beaumont, Michel

(56) Documents cités:
- WO-A-93/02407
- GB-A- 2 243 961
- GB-A- 2 310 570
- US-A- 4 502 152
- US-A- 5 502 369

## Description

La présente invention concerne le domaine des convertisseurs de tension continus/continus destinés à alimenter une charge en maintenant la tension aux bornes de la charge à une valeur prédéterminée. L'invention s'applique plus particulièrement aux convertisseurs de type abaisseurs de tension destinés à alimenter, au moyen d'une pile, un dispositif mobile. En particulier, la présente invention s'applique à l'alimentation d'un téléphone portable à partir d'une pile rechargeable.

Les convertisseurs continus/continus se répartissent essentiellement en deux catégories. Une première catégorie concerne les alimentations à découpage et une deuxième catégorie concerne les régulateurs linéaires.

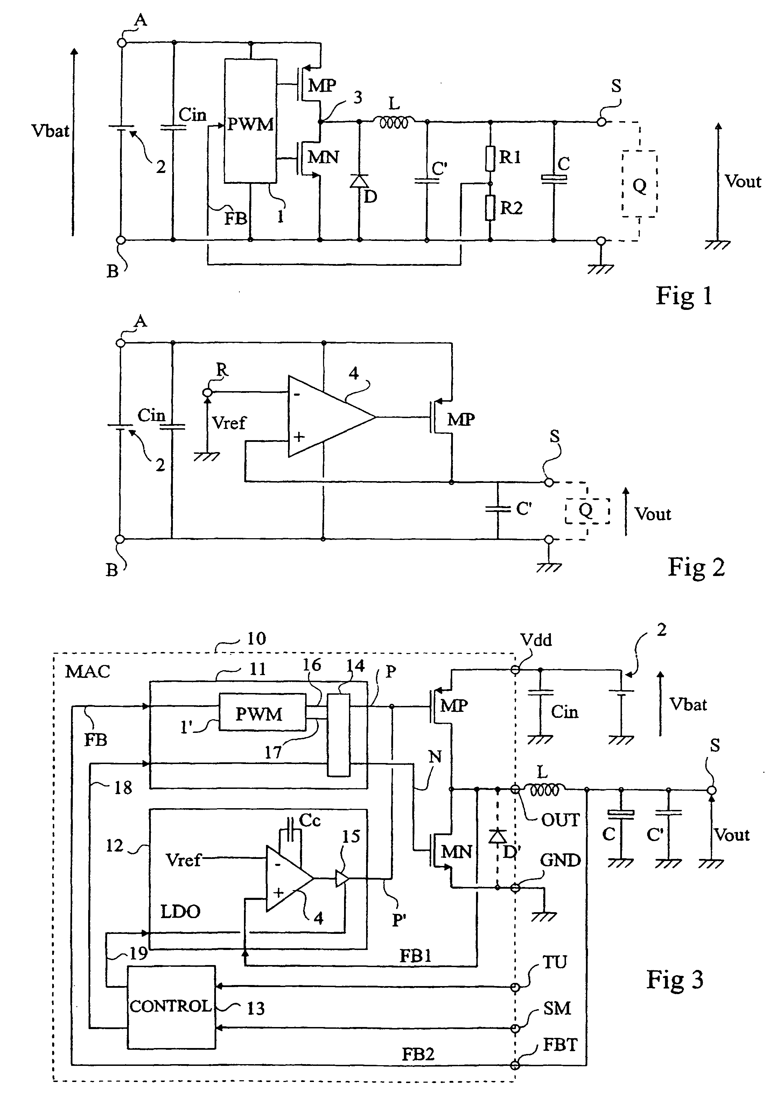

La figure 1 représente un exemple de convertisseur classique de type alimentation à découpage (SMPS). Un tel convertisseur comporte deux transistors MOS, respectivement à canal P MP et à canal N MN, montés en série entre deux bornes A, B d'application d'une tension d'entrée Vbat continue fournie, par exemple, par une batterie rechargeable 2. La borne B représente la masse du circuit. Le point milieu 3 de l'association en série des transistors MP et MN est connecté à une première borne d'une inductance L. Une deuxième borne de l'inductance L est reliée directement à une borne S de sortie du convertisseur destinée à alimenter une charge Q sous une tension Vout prédéterminée. Un condensateur de stockage C, généralement un condensateur chimique de forte valeur, est connecté entre la borne S et la masse. Un condensateur C' de découplage est en outre généralement connecté entre la deuxième borne de l'inductance L et la masse. Il s'agit généralement d'un condensateur céramique de faible valeur. L'inductance L est associée à une diode de roue libre D connectée entre sa première borne et la masse. Un bloc 1 de commande par modulation de largeur d'impulsion (PWM) des transistors MP et MN asservit la tension de sortie Vout à la valeur prédéterminée souhaitée. Le bloc 1 reçoit un signal FB prélevé au point milieu d'une association en série de résistances R1 et R2 connectées entre la borne S et la masse. Le bloc 1 reçoit en outre un signal d'horloge (non représenté) et un condensateur Cin est généralement monté en parallèle sur la batterie entre les bornes A et B. Le fonctionnement d'un tel convertisseur est parfaitement connu et ne sera pas détaillé.

La figure 2 représente un exemple de schéma classique d'un régulateur linéaire de tension positive. Un tel régulateur comprend essentiellement un amplificateur 4 de commande d'un élément de puissance MP destiné à alimenter une charge Q sous une tension Vout prédéterminée. Une pile rechargeable 2 est connectée entre des bornes A et B d'entrée du régulateur, la borne B constituant la masse du montage. La charge Q est connectée entre une borne S de sortie du régulateur et la masse. L'élément de puissance est généralement constitué d'un transistor MOS, par exemple à canal P, pour minimiser par rapport à l'emploi d'un transistor bipolaire la tension dite de déchet, c'est-à-dire la chute de tension entre les bornes A et S du régulateur, et pour économiser le courant de commande "entrant" par la base d'un transistor bipolaire. La source du transistor MP est connectée à la borne A tandis que son drain constitue la borne S. Un condensateur de découplage C' est généralement connecté entre la borne S et la masse, et un condensateur Cin est généralement connecté entre les bornes A et B en parallèle sur la pile rechargeable 2. L'amplificateur 4 comporte une première entrée inverseuse reliée à une borne R sur laquelle est appliquée une tension de référence Vref. Une deuxième entrée non inverseuse de l'amplificateur 4 est reliée à la borne S. Une sortie de l'amplificateur 4 est reliée à la grille du transistor MP pour modifier, en fonction de la tension d'erreur entre les bornes inverseuse et non inverseuse, la tension grille-source du transistor MP et maintenir ainsi la tension Vout à la valeur de référence Vref.

Le choix entre une alimentation à découpage et un régulateur linéaire dépend de l'application et, en particulier, du type de pile rechargeable utilisée.

En effet, l'évolution de la décharge des piles rechargeables est différente selon leur type. Par exemple, les batteries de type nickel-cadmium (Ni-Cd) ont une caractéristique de décharge brusque, c'est-à-dire que la tension qu'elles délivrent reste sensiblement régulière avant de chuter brusquement. Par contre, les batteries de type lithium-ion (Li-ion) ont une caractéristique de décharge en pente douce, c'est-à-dire que la tension qu'elles délivrent diminue progressivement au fur et à mesure de l'utilisation.

Ceci est particulièrement gênant dans l'application particulière aux téléphones portables. En effet, dans une telle application, plusieurs téléphones (par exemple, 8) se partagent un même canal de communication. Il en découle que les besoins en courant d'un téléphone donné ne sont pas constants. Il est généralement nécessaire de passer d'une mode de pleine charge à un mode de quasi-absence de courant en moins de 10 µs. Cela ne pose pas de problème si la tension de batterie est suffisamment élevée par rapport à la tension de sortie. Par contre, si la tension d'entrée est faible, cette contrainte ne peut alors pas être respectée, car la pente du courant est liée à l'inductance L (figure 1). Pour respecter cette contrainte, il faudrait faire fonctionner l'alimentation à découpage à des fréquences nettement plus élevées que leurs fréquences habituelles de l'ordre de 200 kHz.

Un autre inconvénient d'une alimentation à découpage de type "abaisseur de tension" est qu'elle présente une tension de déchet plus élevée qu'un régulateur linéaire. En pratique, une alimentation à découpage requiert au moins 3 volts de tension d'alimentation pour une tension de sortie de 2,7 volts.

De plus, dans un téléphone portable, l'alimentation à découpage présente deux modes de fonctionnement. Un premier mode de fonctionnement est destiné aux périodes de fort appel de courant par la charge. Il s'agit d'un mode où les trains d'impulsions de commande sont à fréquence fixe. Dans un tel mode de fonctionnement, la consommation interne de l'alimentation à découpage est de l'ordre de 1 mA. Un deuxième mode de fonctionnement (généralement désigné par son appellation anglo-saxonne "PFM in SKIP MODE") est un mode de fonctionnement où tout en restant synchrone avec la fréquence fixe du premier mode, on saute des cycles d'horloge. Ainsi, dans ce deuxième mode de fonctionnement, non seulement la largeur des impulsions varie mais également la fréquence. Ce mode de fonctionnement est destiné aux périodes de moindre appel de courant par la charge et entraîne une consommation interne plus faible de l'ordre de 100 µA. Toutefois, la diminution de la fréquence du train d'impulsions introduit un problème de bruit car la fréquence se trouve alors généralement dans la bande audio utilisée par la téléphonie. Il est alors nécessaire d'avoir recours à des filtres supplémentaires pour éviter les perturbations.

On serait donc conduit à préférer les régulateurs linéaires, en particulier, pour des piles lithium-ion. Toutefois, un régulateur linéaire présente d'autres inconvénients.

Un inconvénient est que le rendement d'un tel régulateur est inversement proportionnel à la tension d'entrée. Ainsi, pour une pile lithium-ion, on obtient un très mauvais rendement lorsque la pile est en pleine charge. De plus, comme la consommation du régulateur linéaire est sensiblement constante quel que soit le courant appelé par la charge, cette consommation est liée au courant maximal pour lequel est prévu le régulateur, et est alors particulièrement élevée dans les périodes de faible appel de courant.

Avec des piles nickel-cadmium dont la tension nominale est supérieure et pas trop éloignée de la tension de sortie du régulateur, on utilise généralement un régulateur linéaire car la tenue en charge de la batterie a une pente quasi nulle jusqu'au moment où elle chute brusquement.

Du document GB-A-2 243 961 il est connu un régulateur qui peut fonctionner selon le besoin comme régulateur de type à alimentation à découpage ou comme régulateur linéaire.

La présente invention vise à pallier les inconvénients des régulateurs de tension classiques en proposant un nouveau régulateur de tension qui fonctionne correctement quel que soit le type de batterie rechargeable qui l'alimente.

La présente invention vise également à proposer un tel régulateur qui améliore le seuil de tension d'entrée de fonctionnement en dessous duquel la régulation n'est plus assurée, par rapport à un système à alimentation à découpage.

La présente invention vise également à optimiser le rendement de la fourniture de tension à la charge, quels que soient le régime de fonctionnement et/ou le niveau de tension de la batterie.

La présente invention vise en outre à ce que le régulateur puisse passer rapidement de périodes de pleine charge à des périodes de faible charge.

Une caractéristique de la présente invention est de permettre l'association, au sein d'un même circuit de régulation de tension, d'un système d'alimentation à découpage et d'un système de régulation linéaire. Une autre caractéristique de la présente invention est de permettre une sélection entre un fonctionnement en alimentation à découpage et un fonctionnement en régulateur linéaire, au moins en fonction de la tension disponible aux bornes de la pile rechargeable et, de préférence, également en fonction du courant appelé par la charge.

Plus particulièrement, la présente invention prévoit un régulateur d'une tension destinée à alimenter une charge à partir d'une batterie, tel que défini dans la revendication 1.

Selon un mode de réalisation de la présente invention, l'élément de régulation linéaire est sélectionné quand ladite différence de tension est inférieure à une première valeur seuil prédéterminée.

Selon un mode de réalisation de la présente invention, le moyen de commande sélectionne un des éléments de régulation en fonction du courant appelé par la charge.

Selon un mode de réalisation de la présente invention, l'élément d'alimentation à découpage est sélectionné quand le courant appelé par la charge est supérieur à une deuxième valeur seuil prédéterminée.

Selon un mode de réalisation de la présente invention, l'élément d'alimentation à découpage est sélectionné quand, à la fois ladite différence de tension est supérieure à la première valeur seuil et le courant appelé par la charge est supérieur à la deuxième valeur seuil.

Selon un mode de réalisation de la présente invention, des signaux de sorties respectifs des circuits de commande, envoyés sur la grille du premier transistor MOS, sont délivrés par des amplificateurs à trois états.

Selon un mode de réalisation de la présente invention, le régulateur de tension comporte un mode de fonctionnement sans régulation, dans lequel le premier transistor est placé en saturation.

Selon un mode de réalisation de la présente invention, le régulateur de tension est destiné à alimenter un téléphone portable, et comporte une borne de réception d'un signal indicateur de l'état de mise en veille du téléphone portable.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
les figures 1 et 2 qui ont été décrites précédemment sont destinées à exposer l'état de la technique et le problème posé ;
la figure 3 représente schématiquement, un mode de réalisation d'un régulateur de tension selon la présente invention ;
la figure 4 illustre le fonctionnement du régulateur représenté à la figure 3 en fonction de la tension de batterie et du courant appelé par la charge ;
la figure 5 représente la caractéristique de consommation en courant du régulateur selon l'invention par rapport au courant appelé par la charge ; et
la figure 6 illustre le fonctionnement d'un régulateur selon la présente invention alimenté par une batterie de type lithium-ion.

Les mêmes éléments ont été désignés par les mêmes références aux différentes figures. Pour des raisons de clarté, seuls les éléments nécessaires à la compréhension de l'invention ont été représentés aux figures et seront décrits par la suite.

La figure 3 représente un mode de réalisation d'un circuit 10 de régulation de tension selon la présente invention. Ce circuit comporte essentiellement deux transistors MOS, respectivement à canal P MP et à canal N MN, montés en série entre une borne Vdd destinée à être reliée à la borne positive d'une pile rechargeable 2 et une borne de masse GND. Le point milieu de l'association en série des transistors MP, MN constitue une borne OUT de sortie du circuit. Le circuit 10 (MAC) de régulation comporte deux blocs 11, 12 de commande des transistors de sortie. Un premier bloc 11 est destiné à commander les transistors MP et MN en alimentation à découpage (SMPS). Un deuxième bloc 12 est destiné à commander le transistor MP en régulateur linéaire à faible tension de déchet (LDO). Les blocs 11 et 12 sont commandés par un circuit 13 (CONTROL) de sélection du mode de fonctionnement du circuit 10. La borne OUT de sortie du circuit 10 est reliée, par l'intermédiaire d'une inductance L, à une borne S délivrant une tension Vout d'alimentation d'une charge. Comme précédemment, un condensateur Cin est placé en parallèle sur la pile rechargeable 2, un condensateur de stockage C et un condensateur C' de découpage sont connectés en parallèle entre la borne S et la masse.

Une caractéristique de la présente invention est que, pour permettre la sélection du mode de fonctionnement du circuit 10 en minimisant le temps de réponse dû à la capacité de grille importante du transistor MP, on prévoit, en sortie des blocs 11 et 12, un circuit, respectivement, 14, 15 commandable dans un état de sortie à haute impédance.

Le circuit 11 comporte, de façon classique, un bloc 1' de commande par modulation de largeur d'impulsion (PWM) des grilles des transistors MP et MN. Une première sortie 16 du bloc 1' est relié, par l'intermédiaire d'un amplificateur à trois états (non représenté) du circuit 14, à la grille du transistor MP. Une deuxième sortie 17 du bloc 1' est reliée, par l'intermédiaire d'un commutateur (de préférence, un amplificateur à trois états, non représenté) du circuit 14 à la grille du transistor MN. Le circuit 14 est commandé par un signal 18 délivré par le circuit 13. Le bloc 1' est, de façon classique, commandé par un signal FB prélevé sur une borne FBT d'entrée du circuit 10, reliée à la borne S pour mesurer la tension de sortie. Le cas échéant, cette mesure de la tension de sortie pourra s'effectuer comme cela est représenté à la figure 1, par l'intermédiaire d'un pont diviseur résistif. Le bloc 1' reçoit également un signal d'horloge (non représenté).

Selon l'invention, le bloc 1' ne possède cependant qu'un seul mode de fonctionnement, à savoir, une modulation de largeur d'impulsion à fréquence fixe. En effet, selon la présente invention, un mode de fonctionnement à fréquence variable n'est pas nécessaire.

Le circuit 12 de régulation linéaire comporte, de façon classique, un amplificateur d'erreur 4 de la tension sur le drain du transistor MP par rapport à une tension de référence Vref. Une entrée inverseuse de l'amplificateur d'erreur 4 reçoit la tension Vref et une entrée non inverseuse reçoit un signal FB1 prélevé sur la borne OUT. La sortie de l'amplificateur d'erreur est reliée, par l'intermédiaire du circuit 15 (par exemple, un amplificateur à trois états) à la grille du transistor MP. Le circuit 15 est commandé par un signal 19 délivré par le bloc de commande général 13.

Selon la présente invention, quand le régulateur doit fonctionner en alimentation à découpage, les commutateurs ou amplificateurs à trois états du circuit 14 sont passants et la sortie P' de l'amplificateur 15 est placée dans un état de haute impédance. Ainsi, d'un point de vue fonctionnel, tout se passe alors comme si le circuit 12 n'existait pas. En alimentation à découpage, le fonctionnement du régulateur selon l'invention est alors parfaitement classique d'un point de vue fonctionnel.

Quand le circuit de régulation 10 doit fonctionner en régulateur linéaire, la première sortie P du circuit 14 est placée dans un état de haute impédance et sa deuxième sortie N est forcée à l'état bas, c'est-à-dire à la masse. L'amplificateur à trois états 15 est placé dans un état passant par le signal 19. Ainsi, d'un point de vue fonctionnel, tout se passe alors comme si le circuit 11 et le transistor MN n'existaient pas. La diode de roue libre associée à l'inductance L est ici constituée, par exemple, par la diode intrinsèque D' du transistor MN. Cette diode n'est toutefois pas incompatible avec le fonctionnement en alimentation à découpage.

Toutefois, la stabilité d'un régulateur linéaire classique impose généralement l'emploi d'un condensateur C' (figure 2). Ce condensateur est incompatible avec le fonctionnement du régulateur en mode "découpage". Ainsi, selon la présente invention, on utilise un condensateur Cc de compensation interne pour garantir la stabilité du fonctionnement en régulateur linéaire. Ce type de compensation est à la portée de l'homme du métier à partir des indications fonctionnelles données ci-dessus.

En régulation linéaire, on notera que la présence de l'inductance L n'est pas gênante pourvue qu'elle possède une faible résistance série équivalente.

Un avantage du recours à des amplificateurs à trois états pour la commutation opérée par les circuits 14 et 15 est qu'on minimise ainsi la consommation par rapport à l'emploi de simples commutateurs. En effet, un simple commutateur introduit une faible résistance qui est, soit connectée à la masse, soit connectée à une tension positive de commande de la grille du transistor MOS à laquelle est relié le commutateur. Une telle liaison à la grille du transistor MOS donne lieu à des courants de charge et de décharge importants des capacités parasites équivalentes ramenées entre la grille du transistor MOS et la masse. De plus, la faible résistance série introduite par un simple commutateur provoque des retards sur les signaux de commande qui deviennent inacceptables pour des fréquences de travail de l'alimentation à découpage de l'ordre de plusieurs centaines de kHz.

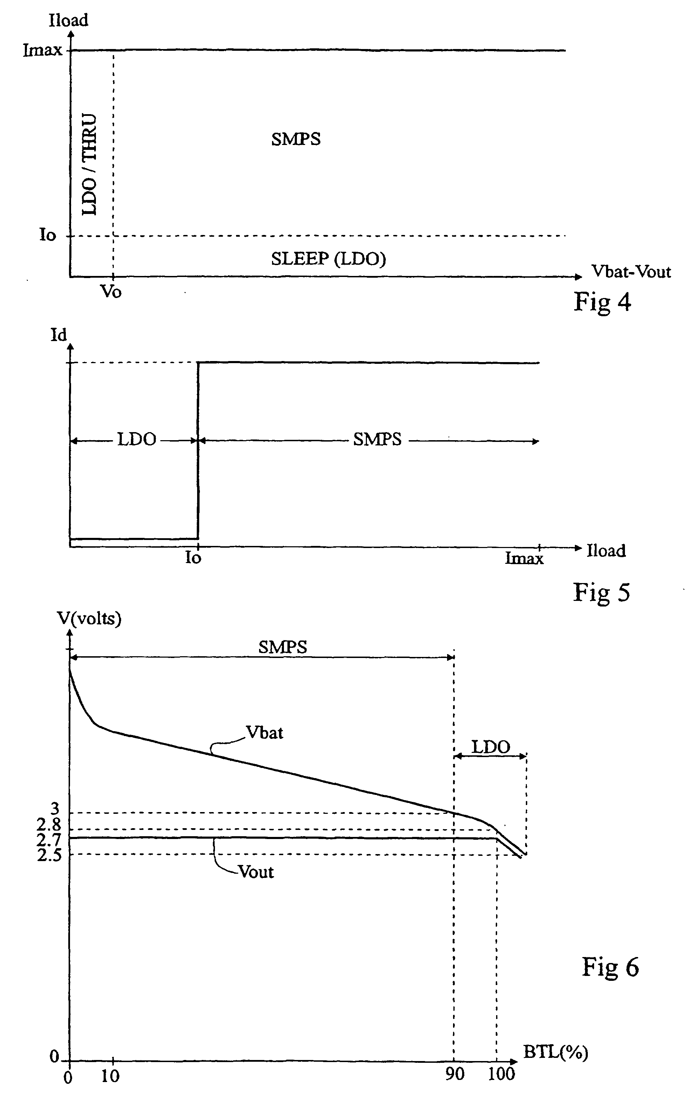

La commande en sélection du mode de fonctionnement du circuit 10 selon la présente invention est exposée ci-après en relation avec les figures 4 à 6.

La figure 4 illustre le mode de fonctionnement sélectionné en fonction du courant Iload appelé par la charge et de la différence de tension Vbat - Vout.

Quand le courant appelé par la charge est inférieur à une valeur seuil I0 prédéterminée, le régulateur fonctionne en régulateur linéaire (LDO). Quand, à la fois le courant Iload est supérieur à la valeur I0 et la différence Vbat - Vout est supérieure à une valeur seuil V0 prédéterminée, le régulateur fonctionne en alimentation à découpage (SMPS). Quand la différence de tension entre l'entrée Vdd et la sortie Vout du régulateur est inférieure à la tension V0, le régulateur 10 fonctionne, par exemple, en régulateur linéaire sur toute la plage (0-Imax) de courant susceptible d'être appelé par la charge (LDO).

La mesure des courant et tension par rapport aux valeurs seuils peut être interne ou externe au circuit 10 de régulation. Dans un mode de réalisation où ces mesures sont internes au circuit, celui-ci dispose de moyens de mesure du courant appelé par la charge. On pourra, par exemple, avoir recours à une résistance série pour cette mesure. Toutefois, on préférera utiliser un transistor MOS monté en parallèle sur le transistor MP pour extraire une image du courant traversant ce transistor. On évite ainsi d'accroître la tension de déchet du régulateur. A partir de la mesure du courant appelé par la charge, on compare la valeur mesurée par rapport à une valeur seuil interne au circuit pour sélectionner le mode de fonctionnement du régulateur.

De même, on pourra prévoir des moyens de mesure de la différence de tension entre les bornes Vdd et Vout pour comparer cette différence de tension par rapport à la valeur VO et commuter le circuit en conséquence.

Dans un mode de réalisation de la présente invention, en particulier destiné à un téléphone portable, on préférera cependant utiliser des signaux disponibles au sein de la charge pour commander le régulateur selon l'invention. En particulier, dans un téléphone portable classique, l'état de charge de la batterie est connu afin d'avertir l'utilisateur d'un besoin de recharge.

Selon ce mode de réalisation, le régulateur de tension de l'invention possède, outre le fonctionnement en alimentation à découpage, trois modes de fonctionnement possibles.

Un premier mode de fonctionnement (THRU) peut être utilisé si la borne S de sortie est connectée uniquement à une entrée d'un post-régulateur abaisseur de la tension Vout ou à des entrées de post-régulateurs de ce type (non représentés). Le transistor MP peut alors être rendu conducteur en permanence et ne présenter alors qu'une faible résistance série à l'état passant (Rdson). Un tel mode (THRU) de fonctionnement, où le transistor MP est en saturation, est, par exemple, activé à l'aide d'un signal TU indicateur de l'état de charge de la batterie par rapport à une valeur seuil V0. Par exemple, pour une tension de sortie Vout de 2,7 volts, le signal TU est à l'état bas quand la tension aux bornes de la batterie est inférieure à 3 volts. On notera que ce mode de fonctionnement "forcé" est optionnel.

Un deuxième mode de fonctionnement (SLEEP) correspond au mode de fonctionnement en régulateur linéaire dans lequel le courant appelé par la charge est inférieur à une valeur seuil I0. Toutefois, dans le mode de réalisation préféré illustré par la figure 3, le mode de fonctionnement à faible courant correspond à un mode de veille du téléphone portable en l'absence de communication. Ce mode est donc connu du circuit de commande du téléphone. Le circuit 10 comporte alors une borne SM recevant un signal à deux états indicateur d'une mise en veille du téléphone portable.

Un troisième mode de fonctionnement (LDO) correspond au cas où la tension d'entrée est faible (inférieure au seuil V0). Dans ce cas, le régulateur linéaire présente un très bon rendement, quel que soit le courant de sortie Iload. Ce mode de fonctionnement est, par exemple, activé comme le mode précédent (SLEEP) par un changement d'état du signal présent sur la borne SM lorsque la tension Vbat est inférieure à une valeur seuil connue du circuit de commande du téléphone portable.

On notera que ces différents modes de fonctionnement SLEEP (LDO) et LDO/THRU peuvent être combinés entre eux au gré de l'utilisateur lorsque, à la fois, Vbat - Vout < V0 et Iload < I0. Par exemple, on peut préférer le mode THRU au mode SLEEP dans cette zone particulière de fonctionnement. La sélection s'effectue en adaptant le circuit 13 en fonction de l'application.

Un régulateur de tension selon la présente invention combinant à tout le moins les deux derniers modes de fonctionnement, c'est-à-dire fonctionnant en régulateur linéaire quand la tension Vbat - Vout et/ou le courant Iload sont inférieurs aux valeurs V0, respectivement I0, présente déjà plusieurs avantages par rapport aux régulateurs classiques.

Un avantage de la présente invention est que les performances du régulateur de tension sont indépendantes du type de batterie utilisée.

Un autre avantage de la présente invention est qu'elle minimise la consommation du régulateur en garantissant une faible tension de déchet pendant les périodes de veille de ce dernier.

Un autre avantage de la présente invention, dans le cas où le premier mode de fonctionnement est omis, est qu'elle permet d'utiliser un régulateur linéaire dimensionné pour un faible courant, ce qui minimise encore la consommation du régulateur pendant les périodes de veille.

Un autre avantage de la présente invention, dans le cas où le troisième mode de fonctionnement est prévu, est qu'elle augmente la durée possible d'utilisation de la batterie entre deux périodes de recharge.

La figure 5 représente la caractéristique du courant Id consommé par le régulateur de l'invention en fonction du courant Iload appelé par la charge. Quand le courant appelé par la charge est inférieur à la valeur I0, le courant consommé par le régulateur est à une faible valeur fixée par le régulateur linéaire. Quand le courant Iload est supérieur à la valeur I0, le courant consommé par le régulateur présente une valeur maximale constante fixée par l'alimentation à découpage.

La figure 6 illustre les performances, en termes de durée d'utilisation (BTL) entre deux périodes de recharges, d'une batterie de type lithium-ion au moyen d'un régulateur selon la présente invention. On suppose que la tension Vout est fixée à 2,7 volts et que le circuit 11 requiert une tension Vdd de 3 volts pour fonctionner correctement. La valeur V0 est donc fixée à 3 volts. La figure 6 ne tient pas compte des périodes de veille de la charge.

Tant que la tension Vbat est supérieure à 3 volts et que le courant Iload est supérieur à I0, le régulateur 10 fonctionne en alimentation à découpage (SMPS). Quand la tension Vbat devient inférieure à 3 volts, le fonctionnement en régulateur linéaire prend le relais et permet d'alimenter correctement la charge jusqu'à ce que la tension atteigne une valeur limite (par exemple, 2,8 volts) correspondant à la chute de tension série du transistor MOS MP. Ainsi, par rapport à la durée (exprimée en pourcentage de tenue de charge) pendant laquelle une batterie lithium-ion est prévue pour fournir une tension de 3 volts, la présente invention permet d'accroître de l'ordre de 10% la durée pendant laquelle le régulateur peut alimenter correctement la charge. On notera qu'une fois que la tension Vbat a atteint une valeur proche du seuil de régulation en mode linéaire (par exemple, 2,8 volts), la charge peut, selon l'invention, toujours être alimentée alors que, dans un circuit à alimentation à découpage classique (figure 1), son alimentation cesse dans la mesure où le transistor MP ne peut plus être polarisé. La tension Vout suit alors l'allure de la tension Vbat à la chute de tension série dans le transistor MP près.

Dans l'exemple représenté à la figure 6, on obtient un rendement supérieur à 90% quand le régulateur fonctionne en alimentation à découpage et un rendement compris entre 90 et 96% quand le régulateur fonctionne en mode linéaire.

Un avantage de la présente invention est qu'elle optimise les fonctionnements respectifs d'une alimentation à découpage et d'un régulateur linéaire tout en permettant l'utilisation d'une batterie de type quelconque.

De préférence, la valeur seuil I0 est fixée en fonction de la charge. On voit ici apparaître un autre avantage d'une mesure externe du courant appelé par la charge qui est que l'utilisateur peut alors modifier ce paramètre comme il le souhaite. Ainsi, le régulateur de tension selon un mode de réalisation préféré de l'invention est parfaitement versatile en fonction de la charge à laquelle il est destiné.

Un autre avantage de la présente invention est qu'elle élimine tout besoin de filtrage lié au fonctionnement à fréquence variable des alimentations à découpage classiques destinées aux téléphones portables.

Dans le cas où le courant appelé par la charge peut varier de façon linéaire, on choisira la valeur seuil I0 de manière à optimiser le rendement du régulateur entre les deux modes de fonctionnement.

A titre d'exemple particulier de réalisation, appliqué à un régulateur de tension destiné à un téléphone portable, on pourra choisir, pour les différents composants, les valeurs suivantes :
- Cin est un condensateur céramique de 100 nF ;
- C est un condensateur chimique de 22 µF présentant une faible résistance série équivalente ;
- C' est un condensateur chimique de 100 nF ; et
- L = 10 µH avec une résistance série équivalente de 0,3 Ohms.

Bien entendu, la présente invention est susceptible de diverses variantes et modifications qui apparaîtront à l'homme de l'art. En particulier, la réalisation pratique du régulateur de tension selon l'invention est à la portée de l'homme du métier à partir des indications fonctionnelles données ci-dessus. En outre, bien que l'invention ait été décrite en relation avec un régulateur de tension positive, celle-ci s'applique bien entendu à un régulateur de tension négative et les modifications à apporter au mode de réalisation décrit sont à la portée de l'homme du métier.

## Revendications

1. Régulateur (10) d'une tension (Vout) destinée à alimenter une charge (Q) à partir d'une batterie (2), **caractérisé en ce qu'**il comporte :
deux transistors MOS (MP, MN) montés en série entre deux bornes (Vdd, GND) destinées à recevoir la tension de batterie (Vbat) ;
un circuit (11) de commande desdits transistors par modulation de largeur d'impulsions ;
un circuit (12) de commande linéaire du premier transistor (MP) ; et
un circuit (13) de sélection du circuit de commande en fonction de la différence de tension entre la tension de batterie (Vbat) et la tension de sortie (Vout).

2. Régulateur de tension selon la revendication 1, **caractérisé en ce que** l'élément (12) de régulation linéaire est sélectionné quand ladite différente de tension est inférieure à une première valeur seuil prédéterminée (V0).

3. Régulateur de tension selon la revendication 1 ou 2, **caractérisé en ce que** le moyen (13) de commande sélectionne un des éléments de régulation (11, 12) en fonction du courant appelé par la charge.

4. Régulateur de tension selon la revendication 3, **caractérisé en ce que** l'élément (11) d'alimentation à découpage est sélectionné quand le courant appelé par la charge (Q) est supérieur à une deuxième valeur seuil prédéterminée (I0).

5. Régulateur de tension selon les revendications 2 et 4, **caractérisé en ce que** l'élément (11) d'alimentation à découpage est sélectionné quand, à la fois ladite différence de tension est supérieure à la première valeur seuil (V0) et le courant appelé par la charge est supérieur à la deuxième valeur seuil (I0) .

6. Régulateur de tension selon l'une quelconque des revendications 1 à 5, **caractérisé en ce que** des signaux de sorties respectifs (P, P') des circuits de commande (11, 12), envoyés sur la grille du premier transistor MOS (MP), sont délivrés par des amplificateurs à trois états (14, 15).

7. Régulateur selon l'une quelconque des revendications 1 à 6, **caractérisé en ce qu'**il comporte un mode de fonctionnement sans régulation (THRU), dans lequel le premier transistor (MP) est placé en saturation.

8. Régulateur de tension selon l'une quelconque des revendications 1 à 7, destiné à alimenter un téléphone portable, **caractérisé en ce qu'**il comporte une borne (SM) de réception d'un signal indicateur de l'état de mise en veille du téléphone portable.

## Patentansprüche

1. Spannungsregler (10) für eine Spannung (Vout) zur Versorgung einer Ladung (Q) aus einer Batterie (2), **dadurch gekennzeichnet, dass** der Spannungsregler (10) Folgendes aufweist:
zwei MOS-Transistoren (MP, MN), die zwischen zwei Anschlüssen (Vdd, GND) zur Aufnahme der Batteriespannung (Vbat) in Reihe geschaltet sind; eine Schaltung (11) zum Steuern der Transistoren durch Pulsbreitenmodulation;
eine Schaltung (12) zur linearen Steuerung des ersten Transistors (MP); und
eine Schaltung (13) zur Auswahl der Steuerschaltung abhängig von der Spannungsdifferenz zwischen der Batteriespannung (Vbat) und der Ausgangsspannung (Vout).

2. Spannungsregler gemäß Anspruch 1, **dadurch gekennzeichnet, dass** das Element (12) zur linearen Regelung ausgewählt ist, wenn die Spannungsdifferenz weniger als ein erster vorbestimmter Schwellenwert (V0) ist.

3. Spannungsregler gemäß Anspruch 1 oder 2, **dadurch gekennzeichnet, dass** die Steuermittel (13) eines der Regelungselemente (11, 12) abhängig von dem von der Ladung gezogenen Strom auswählen.

4. Spannungsregler gemäß Anspruch 3, **dadurch gekennzeichnet, dass** das geschaltete Versorgungselement (11) ausgewählt ist, wenn der von der Ladung (Q) gezogene Strom größer ist als ein zweiter vorbestimmter Schwellenwert (I0).

5. Spannungsregler gemäß Anspruch 2 und 4, **dadurch gekennzeichnet, dass** das geschaltete Versorgungselement (11) ausgewählt ist, wenn gleichzeitig die Spannungsdifferenz größer ist als der erste Schwellenwert (V0) und der von der Ladung gezogene Strom größer ist als der zweite Schwellenwert (10).

6. Spannungsregler gemäß einem der Ansprüche 1 bis 5, **dadurch gekennzeichnet, dass** jeweilige Ausgangssignale (P, P') der Steuerschaltungen (11, 12), die an das Gitter bzw. den Steuereingang des ersten Transistors MOS (MP) geliefert werden, von Verstärkern mit drei Zuständen (14, 15) geliefert werden.

7. Regler gemäß einem der Ansprüche 1 bis 6, **dadurch gekennzeichnet, dass** der Regler eine Betriebsart ohne Regelung (THRU) aufweist, in der der erste Transistor (MP) im gesättigten Zustand ist.

8. Spannungsregler gemäß einem der Ansprüche 1 bis 7 zur Versorgung eines tragbaren Telefons, **dadurch gekennzeichnet, dass** er einen Anschluss (SM) zum Empfang eines Anzeigesignals für einen Bereitschaftszustands des tragbaren Telefons aufweist.

## Claims

1. A voltage (Vout) regulator (10) meant to supply a load (Q) from a battery (2), including:
two MOS transistors (MP, MN) connected in series between two terminals (Vdd, GND) that receive the battery voltage (Vbat);
a pulse width modulation control circuit (11) that controls the transistors;
a linear control circuit (12) that controls the first transistor (MP); and
a selection circuit (13) that selects the control circuit according to the voltage difference between the battery voltage (Vbat) and the output voltage (Vout).

2. The voltage regulator of claim 1, wherein the linear regulation component (12) is selected when the voltage difference is lower than a first predetermined threshold value (V0).

3. The voltage regulator of claim 1 or 2, wherein the control means (13) selects one of the regulation components (11, 12) according to the current consumed by the load.

4. The voltage regulator of claim 3, wherein the switched-mode power supply component (11) is selected when the current consumed by the load (Q) is higher than a second predetermined threshold value (I0) .

5. The voltage regulator of claims 2 and 4, wherein the switched-mode power supply component (11) is selected when both the voltage difference is higher than the first threshold value (V0) and the current consumed by the load is higher than the second threshold value (I0) .

6. The voltage regulator of any of claims 1 to 5, wherein respective output signals (P, P') of the control circuits (11, 12), sent onto the gate of the first MOS transistor (MP), are provided by tri-state amplifiers (14, 15).

7. The voltage regulator of any of claims 1 to 6, wherein the voltage regulator includes an unregulated operating mode (THRU), in which the first transistor (MP) is saturated.

8. The voltage regulator of any of claims 1 to 7, meant to supply a mobile phone, and including a terminal (SM) that can receive a signal indicative of the stand-by state of the mobile phone.
